# EUROPEAN PATENT APPLICATION

(11) **EP 3 144 866 A1**
(43) Date of publication of application: **22.03.2017**
(21) Application number: 16187634.7
(22) Date of filing: 07.09.2016
(51) Int. Cl.: G06Q 20/00, G06Q 30/04, G06Q 40/00

(54) **TAX EXEMPTION PROCESSING SYSTEM, INFORMATION PROCESSING APPARATUS AND METHOD FOR INPUTTING ELECTRONIC SIGNATURE**

(30) Priority: 17.09.2015 JP 2015184009
(71) Applicant: Toshiba TEC Kabushiki Kaisha, Tokyo 141-0032 (JP)
(72) Inventor: YAMAGUCHI, Mitsuru, Shinagawa-ku, Tokyo 141-8562 (JP); NAKAZONO, Takeshi, Shinagawa-ku, Tokyo 141-8562 (JP)
(74) Representative: Takeuchi, Maya

(57) **Abstract**

A storage device comprises a purchaser data file which stores information recorded in a certificate for certifying that a purchaser who purchases a commodity is subject to a tax exemption and information relating to sales of the commodity purchased by the purchaser at a tax-free store in association with a purchaser code of the purchaser. The information processing apparatus acquires the purchaser code of the purchaser who receives refund on a commodity purchased in a facility, receives the purchaser data file associated with the acquired purchaser code from the storage device, creates an electronic document required for a tax exemption measure based on the information recorded in the certificate and the information relating to the sales of the commodity in the purchaser data file received from the storage device, inputs an electronic signature detected by a detection device for detecting the electronic signature to a signature column of the electronic document, and outputs data of the electronic document in which the electronic signature is input to the signature column.

## Description

### FIELD

Embodiments described herein relate generally to a tax exemption processing system suitable for a tax exemption system for a nonresident, an information processing apparatus used in the same and a method for inputting an electronic signature.

### BACKGROUND

In a case of a manager who runs a general consumption tax exemption store sells a commodity to a nonresident such as a foreign tourist with a certain method, commodity taxes (consumption tax, alcohol tax and the like) levied on the commodity is exempted. Recently, even in a specific commercial facility such as a shopping mall, a shopping center, a tenant building and the like, instead of the manager, a third party who is an approved or admitted tax exemption procedure business provider can carry out procedures of a tax exemption measure relating to a sales of commodities to the nonresident in a procedure consignment type tax-free store by setting a tax exemption procedure counter in the facility.

In such a specific commercial facility, a purchaser who is a nonresident purchases a commodity at a price including an applicable tax at each tax-free store in the facility. Then, if the shopping in the facility is finished, the purchaser goes to the tax exemption procedure counter to carry out the procedures of the tax exemption measure to receive a refund of the applicable tax amount.

Specifically, the purchaser presents a receipt on which a detail of the purchased commodities are described and a certificate like a passport for certifying that he or she is a nonresident to the admitted tax exemption procedure business provider. The admitted tax exemption procedure business provider assorts the commodities (tax exemption applicable item) purchased by the purchaser into consumables and general goods other than the consumables on the basis of information of the receipt, totals tax excluded prices respectively for the consumables and the general goods and determines whether or not each assorted group is subject to the tax exemption. Then, if the group is subject to the tax exemption, the admitted tax exemption procedure business provider creates documents such as a purchase record slip, a purchaser written oath and a consumables warning label required for a tax exemption procedure.

The tax-free store has a liability to preserve the purchaser written oath for seven years from the day on which two months elapses from the next day of the last day of the taxable period to which the day on which the tax exemption sales is carried out by the tax-free store belongs, and the purchaser written oath is created for each tax-free store at which the purchaser purchases the commodity.

The admitted tax exemption procedure business provider pastes the purchase record slip on the passport and then returns the passport to the purchaser. Further, in a case in which contents in a case or box in which the consumables are packaged cannot be grasped, the admitted tax exemption procedure business provider pastes a detail of the contents and a label for calling attention such as a note "Do not open the case until departure from the country" and then hands over the case to the purchaser. Furthermore, the admitted tax exemption procedure business provider refunds a taxable amount to the purchaser, receives a signature (sign) to each purchaser written oath from the purchaser and collects each purchaser written oath to which the sign is completed. Through the above, the procedures of the tax exemption measure are terminated. The collected purchaser written oaths are stored at each tax-free store.

In this way, the admitted tax exemption procedure business provider can collectively carry out the procedures of the tax exemption measure of the tax-free store in the specific commercial facility by arranging the tax exemption procedure counter in the specific commercial facility. However, in an existing system, a purchaser signs the purchaser written oath by hand. It is necessary that the purchaser written oath is created by each tax-free store. Thus there is a problem that the burden of the purchaser who goes to shopping at many tax-free stores is large.

To solve such problems, there is provided a tax exemption processing system, comprising: an information processing apparatus and a storage device, wherein
the storage device includes:
a purchaser data file which stores information recorded in a certificate for certifying that a purchaser who purchases a commodity is subject to a tax exemption and information relating to a sales of the commodity purchased by the purchaser in association with a purchaser code for identifying the purchaser; and
the information processing apparatus includes:
   a first reception module configured to receive the purchaser code of the purchaser who receives a refund on the commodity purchased;
   a second reception module configured to receive the purchaser data file associated with the purchaser code received by the first reception module from the storage device;
   a creation module configured to create an electronic document, having a signature column, which is required for a tax exemption measure based on the information recorded in the certificate and the information relating to the sales of the commodity in the purchaser data file received by the second reception module;
   a signature module configured to input an electronic signature detected by a detection device for detecting the electronic signature to the signature column of the electronic document; and
   an output module configured to output data of the electronic document in which the electronic signature is input to the signature column.

Preferably, the output module further contains a module for sending data of the electronic document to the storage device; and
the storage device outputs the data of the electronic document received from the information processing apparatus to a storage device for keeping the data of the electronic document for a specified period.

Preferably still, the creation module creates the electronic document the number of which corresponds to a required number thereof obtained from the information relating to the sales of the commodity; and
the signature module inputs the electronic signature to signature columns of all the electronic documents created by the creation module.

The invention also relates to an information processing apparatus, comprising:
a first reception module configured to receive a purchaser code for identifying a purchaser who receives a refund on a commodity purchased;
a second reception module configured to receive a purchaser data file associated with the purchaser code received by the first reception module from a storage device which stores the purchaser data file in which information recorded in a certificate for certifying that the purchaser identified by the purchaser code is subject to a tax exemption and information relating to sales of the commodity purchased by the purchaser are associated with the purchaser code;
a creation module configured to create an electronic document, having a signature column, which is required for a tax exemption measure based on the information recorded in the certificate and the information relating to the sales of the commodity in the purchaser data file received by the second reception module;
a signature module configured to input an electronic signature detected by a detection device for detecting the electronic signature to the signature column of the electronic document; and
an output module configured to output data of the electronic document in which the electronic signature is input to the signature column.

Preferably, the creation module creates the electronic document the number of which corresponds to a required number thereof obtained from the information relating to the sales of the commodity; and
the signature module inputs the electronic signature to signature columns of all the electronic documents created by the creation module.

The invention further relates to a method for inputting an electronic signature, including:
receiving a purchaser code for identifying a purchaser who receives a refund on a commodity purchased;
receiving a purchaser data file associated with a purchaser code from a storage device which stores the purchaser data file in which information recorded in a certificate for certifying that the purchaser identified by the purchaser code is subject to a tax exemption and information relating to sales of the commodity purchased by the purchaser are associated with the purchaser code;
creating an electronic document, having a signature column, which is required for a tax exemption measure based on the information recorded in the certificate and the information relating to the sales of the commodity in the purchaser data file;
inputting an electronic signature detected by a detection device for detecting the electronic signature to the signature column of the electronic document; and
outputting data of the electronic document in which the electronic signature is input to the signature column.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic view illustrating the whole constitution of a tax exemption processing system according to an embodiment;
Fig. 2 is a block diagram illustrating the circuit constitution of main sections of a POS terminal contained in the tax exemption processing system shown in Fig. 1;
Fig. 3 is a block diagram illustrating the circuit constitution of main sections of a reception terminal contained in the tax exemption processing system shown in Fig. 1;
Fig.4 is a block diagram illustrating the circuit constitution of main sections of a settlement terminal contained in the tax exemption processing system shown in Fig. 1;
Fig. 5 is a block diagram illustrating the circuit constitution of main sections of a management server contained in the tax exemption processing system shown in Fig. 1;
Fig. 6 is a schematic view illustrating the data structure of a tax exemption commodity database stored in the management server shown in Fig. 5;
Fig. 7 is a schematic view illustrating the data structure of a purchaser data file stored in the management server shown in Fig. 5;
Fig. 8 is a schematic view illustrating the data structure of a purchase record stored in the purchaser data file shown in Fig. 7;
Fig. 9 is a flowchart illustrating procedures of a main information processing executed by a CPU of the reception terminal according to a control program;
Fig. 10 is a flowchart illustrating procedures of a main information processing executed by a CPU of the POS terminal according to a control program;
Fig. 11 is a flowchart illustrating procedures of a main information processing executed by a CPU of the settlement terminal according to a control program;
Fig. 12 is a flowchart illustrating procedures of a creation processing of a purchaser written oath shown in Fig. 11;
Fig. 13 is a flowchart illustrating procedures of a main information processing executed by a CPU of a management server at the time a tax exemption receiving data is received;
Fig. 14 is a flowchart illustrating procedures of a main information processing executed by the CPU of the management server at the time a tax exemption purchase data is received; and
Fig. 15 is a flowchart illustrating procedures of a main information processing executed by the CPU of the management server at the time a tax exemption settlement data is received.

### DETAILED DESCRIPTION

In accordance with an embodiment, a tax exemption processing system includes an information processing apparatus and a storage device. The storage device includes a purchaser data file which stores, in association with a unique purchaser code for identifying a purchaser who purchases a commodity, information described in a certificate for certifying that the purchaser is subject to a tax exemption and information relating to sales of the commodity purchased by the purchaser. The information processing apparatus includes a first reception module, a second reception module, a creation module, a signature module and an output module. The first reception module receives the purchaser code of the purchaser who receives a refund on the commodity purchased. The second reception module receives the purchaser data file associated with the purchaser code received by the first reception module from the storage device. The creation module creates an electronic document, having a signature column, which is required for a tax exemption measure based on the information described in the certificate and the information relating to sales of the commodity in the purchaser data file received by the second reception module. The signature module inputs an electronic signature detected by a detection device for detecting the electronic signature to the signature column of the electronic document. The output module outputs a data of the electronic document in which the electronic signature is input to the signature column.

Hereinafter, the tax exemption processing system for reducing burden of the purchaser caused by signing the purchaser written oath according to an embodiment is described with reference to the accompanying drawings.

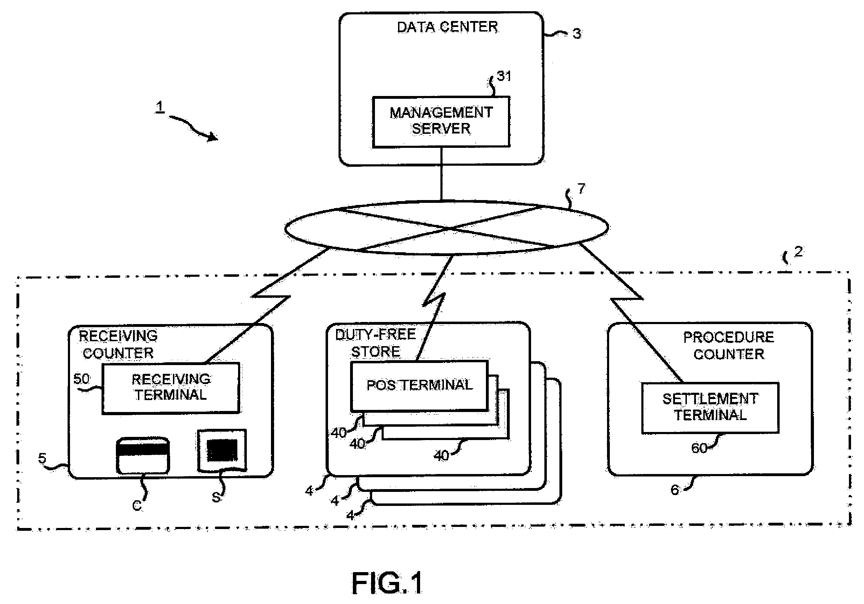

Fig. 1 is a schematic view illustrating the whole constitution of a tax exemption processing system 1. The tax exemption processing system 1 is constituted between a specific commercial facility 2 (hereinafter, referred to as a "facility 2") to which the tax exemption system of a procedure consignment type is applied and a data center 3 managed by an admitted tax exemption procedure business provider of the facility 2 or a corporate entity that receives a consignment from the business provider.

The facility 2 refers to aggregation of a store such as a shopping mall, a shopping center, a tenant building and the like. Each store is approved by a ministry concerned as a consumption tax exemption store 4 (hereinafter, referred to as a "tax-free store 4") of the procedure consignment type. A well-known POS (Point Of Sales) terminal 40 operates as a checkout apparatus in each tax-free store 4. The number of the POS terminals 40 in each store is not specifically limited. Further, the facility 2 may be a general type consumption tax exemption store, in other words, the tax-free store constituted by only one store.

In the facility 2, a tax exemption reception counter 5 (hereinafter, referred to as a "reception counter 5") and a tax exemption procedure counter 6 (hereinafter, referred to as a "procedure counter 6") managed by the admitted tax exemption procedure business provider are arranged. The reception counter 5 and the procedure counter 6 may be separately arranged at different locations in the facility 2 or may be arranged in the same location therein.

The reception counter 5 is a place where the issuance of a tax exemption card C or a tax exemption sheet S required in a transaction of a commodity with the tax exemption is received before a nonresident such as a foreign tourist shops in the facility 2. At the reception counter 5, a reception terminal 50 for issuing the tax exemption card C or the tax exemption sheet S operates. The reception terminal 50 is a form of the information processing apparatus functioning as a reception device. The tax exemption card C is a card medium (magnetic card, IC card and the like) capable of magnetically or electrically holding information. The tax exemption sheet S is issued by printing required items on, for example, a receipt sheet.

The procedure counter 6 is a place where the nonresident who shops at the tax-free store 4 in the facility 2 executes procedures of the tax exemption measure. Jobs of procedures include a refund job of commodity tax (consumption tax, alcohol tax and the like) that is paid by the nonresident for a commodity purchased at the tax-free store 4, an issuance job of documents such as a purchaser written oath, a purchase record slip, a consumables warning label required in a tax exemption measure, and a collecting job of the purchaser written oath. At the procedure counter 6, the settlement terminal 60 operates. The settlement terminal 60 is a form of the information processing apparatus functioning as a settlement device.

The data center 3 is arranged to manage a data relating to procedures of the tax exemption measure in the facility 2 and to store a data processed by the procedures of the tax exemption measure for at least one facility 2. One data center may be commonly used to manage the data relating to procedures of the tax exemption measure and to store the data processed by the procedures of the tax exemption measure in a plurality of the facilities 2. In the data center 3, a management server 31 operates to manage the data relating to procedures of the tax exemption measure and the data processed by the procedures of the tax exemption measure.

In Fig. 1, the management server 31 is arranged in the data center 3; however it is not limited to this. The management server 31 may be arranged in the facility 2, and be connected with a network to manage a data.

The tax exemption processing system 1 includes a computer network 7 (hereinafter, referred to as a "network 7") such as an internet. Through the network 7, each POS terminal 40, the reception terminal 50 and the settlement terminal 60 in the facility 2, and the management server 31 in the data center 3 are connected mutually to construct the tax exemption processing system 1.

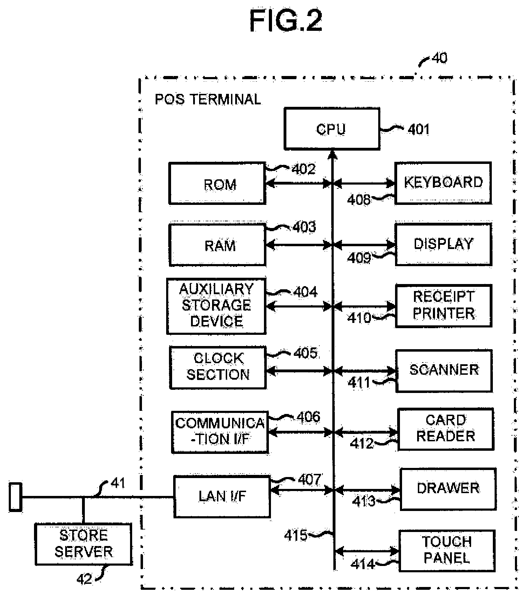

Fig. 2 is a block diagram illustrating the circuit constitution of main sections of the POS terminal 40. The POS terminal 40 includes a CPU (Central Processing Unit) 401, a ROM (Read Only Memory) 402, a RAM (Random Access Memory) 403, an auxiliary storage device 404, a clock section 405, a communication interface 406, a LAN interface 407, a keyboard 408, a display 409, a receipt printer 410, a scanner 411, a card reader 412, a drawer 413 and the touch panel 414. In the POS terminal 40, the CPU 401 is connected with the ROM 402, the RAM 403, the auxiliary storage device 404, the clock section 405, the communication interface 406, the LAN interface 407, the keyboard 408, the display 409, the receipt printer 410, the scanner 411, the card reader 412, the drawer 413 and the touch panel 414 directly through a system transmission path 415 such as an address bus line, a data bus line, a control signal line and the like or indirectly through an input/output circuit.

In the POS terminal 40, a computer is constituted by the CPU 401, the ROM 402, the RAM 403, the auxiliary storage device 404 and the system transmission path 415 for connecting them.

The CPU 401 acting as a central part of the computer controls each section for realizing various functions as the POS terminal 40 according to an operating system and an application program.

The ROM 402 acting as a main storage part of the computer stores the operating system and the application program. There is a case in which the ROM 402 stores a data required for executing a processing by the CPU 401 to control each section.

The RAM 403 also acting as a main storage part of the computer stores a data required for executing a processing by the CPU 401. The RAM 403 is also used as a working area in which information is properly rewritten by CPU 401.

The auxiliary storage device 404 is equivalent to an auxiliary storage section of the computer. The auxiliary storage device 404 is, for example, an EEPROM (Electric Erasable Programmable Read-Only Memory), an HDD (Hard Disc Drive), or an SSD (Solid State Drive). The auxiliary storage device 404 stores data used by the CPU which carries out various processing, and a data generated in the processing by the CPU 401. There is a case in which the auxiliary storage device 404 stores the application program described above.

The clock section 405 functions as a time information source of the POS terminal 40. The CPU 401 counts a current date and time based on the time information counted by the clock section 405. The communication interface 406 is connected with the network 7. The communication interface 406 executes a data communication with the management server 31 of the data center 3 according to a preset protocol via the network 7.

The LAN interface 407 is connected with a LAN 41 formed in the store. The LAN 41 may be a wired LAN or a wireless LAN. The LAN 41 is connected with a store server 42 for managing a commodity database in which various data relating to commodities (containing non-taxable commodities and, taxable commodities) sold in the store is stored in addition to the POS terminal 40. The LAN interface 407 executes a data communication with the store server 42 according to the preset protocol via the LAN 41.

The keyboard 408 is a dedicated input device on which various function keys such as a multiplication key, a subtotal key, a closing key and the like in addition to numeric keys used to input numerical values of quantity, amount and the like are arranged. Necessary functions in the POS terminal 40 may be assigned to keys on a general keyboard. The closing key is used to declare the close of the registration of a commodity transaction by an operator. The commodity transaction refers to an act of carrying out a trade of commodities with one purchaser.

The display 409 is a display device for displaying a commodity name, a price, a total amount and a change amount. The display 409 includes a display for store clerk who operates the POS terminal 40 and a display for purchaser.

Further, a touch panel formed in combination with the input device and the display device may be applied instead of the keyboard 408 and the display 409.

The receipt printer 410 prints a receipt data indicating a details of one commodity transaction on a predetermined receipt paper. The printed receipt paper is cut off by a cutter to be issued as a purchase details receipt and handed over to the purchaser.

The scanner 411 optically reads a code symbol such as a barcode, a two-dimensional data code and the like. A code symbol obtained by converting a unique commodity code of each commodity to a barcode is attached to each commodity. The scanner 411 is used to read the code symbol attached to the commodity purchased by the purchaser. Further, the barcode is printed on the tax exemption sheet S, and the scanner 411 is also used to read the barcode thereon.

The card reader 412 reads data recorded on a card medium. In a case in which the card medium is a magnetic card, the card reader 412 is a magnetic card reader. In a case in which the card medium is an IC card, the card reader 412 is an IC card reader. The IC card reader may be a contact type reader or a non-contact type reader. The card reader 412 is used to read data recorded in a credit card or a point card used by the purchaser. The card reader 412 is also used to read data recorded in the tax exemption card C. Thus, if the tax exemption card C is the magnetic card, the card reader 412 is the magnetic card reader. If the tax exemption card C is the IC card, the card reader 412 is the IC card reader.

The drawer 413, used to receive cash and the like therein, carries out an opening operation in response to an opening signal from the CPU 401. With opening the drawer 413, it is carried out to deliver cash such as a deposited money or change between the store clerk and the purchaser. Further, the POS terminal 40 may be connected with an automatic change dispensing machine instead of the drawer 413. In this case, the automatic change dispensing machine dispenses cash as change on the basis of a dispensing data from the CPU 401.

The touch panel 414 contains a display device and a touch sensor. The display device displays a GUI screen and the like. For example, a well-known device such as a color LCD can be used as the display device. The touch sensor is overlaid on the display surface of the display device. The touch sensor detects a touch position of the operator on the display surface of the display device and sends the position information to the CPU 401. A well-known device can be used as the touch sensor.

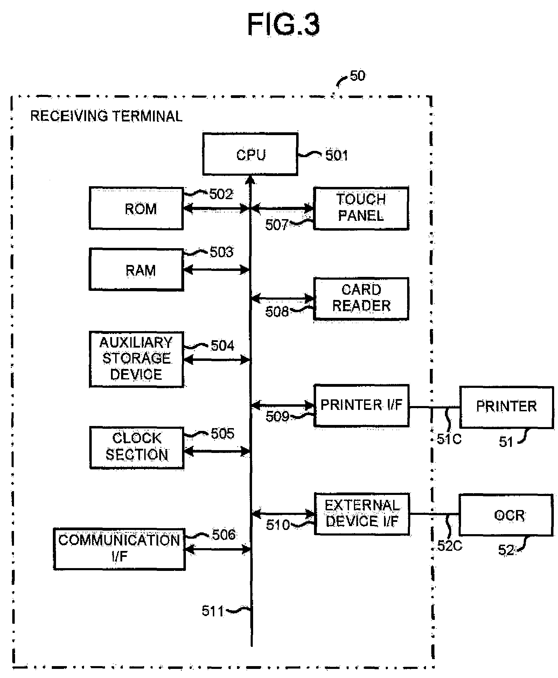

Fig. 3 is a block diagram illustrating the circuit constitution of main sections of the reception terminal 50. The reception terminal 50 is provided with a CPU 501, a ROM 502, a RAM 503, an auxiliary storage device 504, a clock section 505, a communication interface 506, a touch panel 507, a card reader 508, a printer interface 509 and an external device interface 510. In the reception terminal 50, the CPU 501 is connected with the ROM 502, the RAM 503, the auxiliary storage device 504, the clock section 505, the communication interface 506, the touch panel 507, the card reader 508, the printer interface 509 and the external device interface 510 directly through a system transmission path 515 such as an address bus line, a data bus line, a control signal line and the like or indirectly through an input/output circuit.

The CPU 501, the ROM 502, the RAM 503, the auxiliary storage device 504, the clock section 505 and the communication interface 506 of the reception terminal 50 are the same as those of the POS terminal 40. Further, the card reader 508 is also the same as that of the POS terminal 40.

The touch panel 507 contains a display device and a touch sensor. The display device displays a GUI screen and the like. For example, a well-known device such as a color LCD can be used as the display device. The touch sensor is overlaid on the display surface of the display device. The touch sensor detects a touch position of the operator on the display surface of the display device and sends the position information to the CPU 501. A well-known device can be used as the touch sensor.

The printer interface 509 carries out a data communication with the printer 51 detachably connected therewith via a communication cable 51C according to a preset protocol. The printer 51 is used to print the tax exemption sheet S. A thermal printer or an impact dot printer can be applied as this kind of the printer 51. The reception terminal 50 may be constituted by a well-known POS terminal, and a receipt printer mounted in the POS terminal may be a printer for printing the tax exemption sheet S.

The external device interface 510 carries out a data communication with an OCR (Optical Character Reader) 52 detachably connected therewith via the communication cable 52C according to the preset protocol. The OCR 52 is used to optically read information (category of a passport, name, passport number, nationality, date of birth, sex and expiration date of the passport) recorded on, for example, a passport (certificate) for certifying whether or not the purchaser is a nonresident. The certificate is not limited to the passport. For example, in an area like Okinawa Prefecture where a specific tax exemption system is executed, the certificate may be an airline ticket of an air-plane departing from the area.

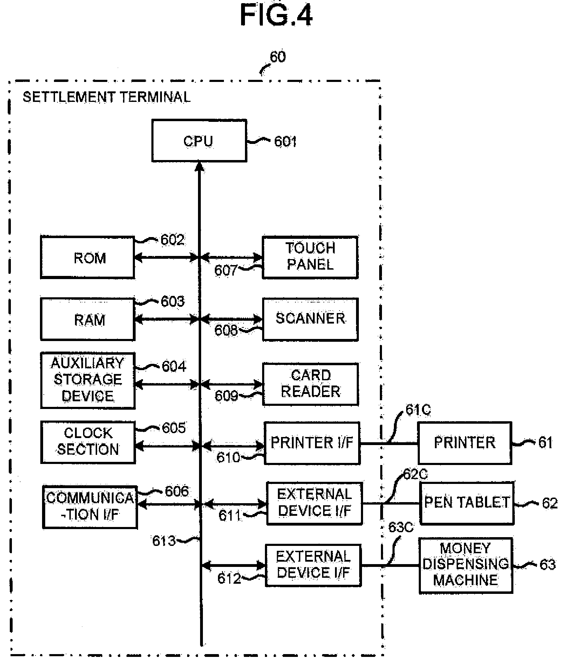

Fig. 4 is a block diagram illustrating the circuit configuration of main sections of the settlement terminal 60. The settlement terminal 60 is provided with a CPU 601, a ROM 602, a RAM 603, an auxiliary storage device 604, a clock section 605, a communication interface 606, a touch panel 607, a scanner 608, a card reader 609, a printer interface 610 and two external device interfaces 611 and 612. In the settlement terminal 60, the CPU 601 is connected with the ROM 602, the RAM 603, the auxiliary storage device 604, the clock section 605, the communication interface 606, the touch panel 607, the scanner 608, the card reader 609, the printer interface 610 and the external device interfaces 611 and 612 directly through a system transmission path 613 such as an address bus line, a data bus line, a control signal line and the like or indirectly through an input/output circuit.

The CPU 601, the ROM 602, the RAM 603, the auxiliary storage device 604, the clock section 605 and the communication interface 606 of the settlement terminal 60 are the same as those of the POS terminal 40 and the reception terminal 50. Further, the card reader 609 is also the same as that of the POS terminal 40 and the reception terminal 50. The touch panel 607 is the same as that of the reception terminal 50, and the scanner 608 is the same as that of the POS terminal 40.

The printer interface 610 carries out a data communication with a printer 61 detachably connected therewith via a communication cable 61C according to a preset protocol. The printer 61 is used to print the document such as the purchase record slip, the consumables warning label and the like. A thermal printer or an impact dot printer can be used as this kind of the printer 61. The settlement terminal 60 may be constituted by a well-known POS terminal, and a receipt printer mounted in the POS terminal may be a printer for printing the foregoing document.

The external device interface 611 carries out a data communication with a pen tablet 62 detachably connected therewith via a communication cable 62C according to a preset protocol. The pen tablet 62 reads a position of an electronic pen on a plate-shaped tablet main body with a sensor built in the tablet main body, and is a detection device for detecting a locus of the electronic pen and electronically acquiring the locus as writing information of a user. A well-known pen tablet such as a liquid crystal pen tablet can be applied as the pen tablet 62. The pen tablet 62 is used to record the electronic signature (electronic sign) of the purchaser in the purchaser written oath (electronic document).

The external device interface 612 carries out a data communication with a money dispensing machine 63 detachably connected therewith via a communication cable 63C according to a preset protocol. The money dispensing machine 63 includes a stocker for storing cashes such as bills and coins by denominations and a mechanism for dispensing cash of the amount corresponding to the dispensing data from the stocker to a dispensing port. The money dispensing machine 63 dispenses taxable amount refunded to the nonresident (purchaser) who purchases the tax exemption commodity at a tax-included price at the tax-free store 4 in the facility 2 and terminates the tax exemption procedure at the procedure counter 6. The money dispensing machine 63 may be a well-known automatic change dispensing machine linked with the POS terminal. Instead of the money dispensing machine 63, the external device interface 612 may be connected with a drawer storing cash and control the drawer to carry out an opening operation in response to an opening signal from the CPU 601. In this case, by displaying the taxable amount on the touch panel 607, a person in charge of the job at the procedure counter 6 gathers cash equivalent to the taxable amount from the drawer and hands over the cash to the nonresident (purchaser).

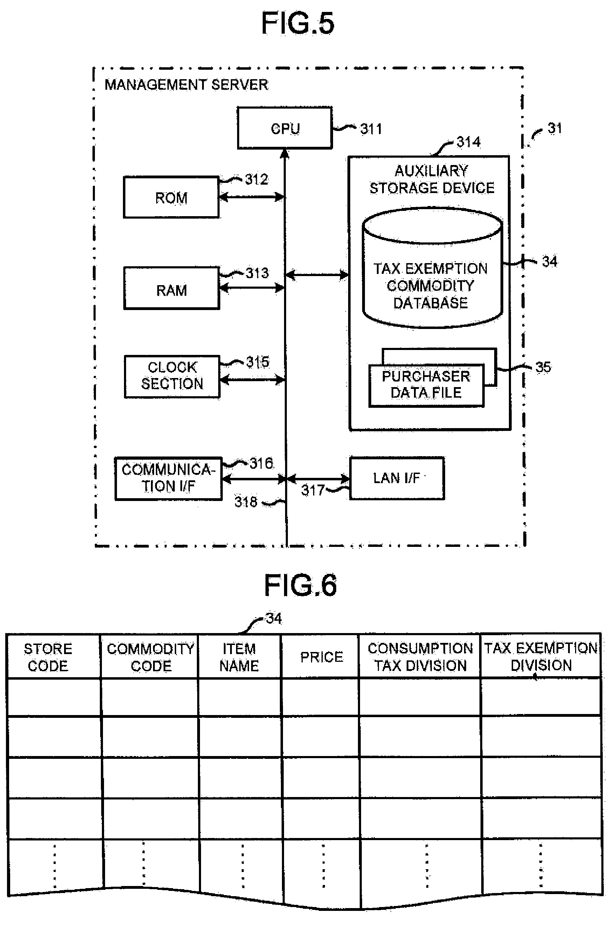

Fig. 5 is a block diagram illustrating the circuit configuration of main sections of the management server 31. The management server 31 is provided with a CPU 311, a ROM 312, a RAM 313, an auxiliary storage device 314, a clock section 315, a communication interface 316 and a LAN interface 317. In the management server 31, the CPU 311 is connected with the ROM 312, the RAM 313, the auxiliary storage device 314, the clock section 315, the communication interface 316 and the LAN interface 317 directly through a system transmission path 318 such as an address bus line, a data bus line, a control signal line and the like or indirectly through an input/output circuit.

The CPU 311, the ROM 312, the RAM 313, the auxiliary storage device 314, the clock section 315 and the communication interface 316 of the management server 31 are the same as those of the POS terminal 40, the reception terminal 50 and the settlement terminal 60.

The LAN interface 317 is connected with a LAN formed in the data center 3. The LAN may be a wired LAN or a wireless LAN.

The management server 31 with such a configuration can store a tax exemption commodity database 34 and a purchaser data file 35 in the auxiliary storage device 314. The tax exemption commodity database 34 stores a data relating to a commodity sold to a nonresident at each tax-free store 4 at which the commodity tax is exempted, i.e., a tax exemption commodity.

The tax exemption commodities include the consumables such as foodstuffs, beverages, medicines, cosmetics and the like, and the general goods other than the consumables. At present, in Japan, if sales total amount of one day at the tax-free store 4 in the consumables purchased by the same nonresident in the same facility 2 is in a range from 5,000 yen to 500,000 yen, the consumables are subjected to the tax exemption. In other words, 5,001 yen and 5,000 yen are set as tax exemption points of the consumables. On the other hand, in a case in which the sales total amount calculated in the same way as stated above of the general goods exceeds 10,000 yen, the general goods are subjected to the tax exemption. In other words, 10,001 yen is set as a tax exemption point of the general goods.

Fig. 6 is a schematic view illustrating a part of a data stored in the tax exemption commodity database 34. As shown in Fig. 6, in the tax exemption commodity database 34, a data record including items such as a store code, a commodity code, an item name, a price, a consumption tax classification and a tax exemption category is stored. The store code is a unique code set for each tax-free store 4 to individually identify each tax-free store 4. The commodity code is a unique code set for each commodity to individually identify each commodity (containing the tax exemption commodity and the non-tax exemption commodity) sold in a tax-free store 4 identified by a corresponding store code. In the meantime, the commodity codes of the commodities of the same kind may be common in each tax-free store 4 or different in each tax-free store 4. Further, it may be not prevented that the same commodity code is attached to the commodities of different kinds in the different tax-free stores 4.

The item name is a name of the commodity identified by the corresponding commodity code. The price is a unit price (tax-included price or tax-excluded price) of the commodity identified by the corresponding commodity code. In the meantime, the item names or the prices of the commodities of the same kind may be common in each tax-free store 4 or different in each tax-free store 4.

The consumption tax classification is information for classifying whether the commodity identified by the corresponding commodity code is defined with a tax-included or a tax-excluded, and furthermore classifying how much consumption tax rate is applied. In a case in which the consumption tax classification is the tax-included, the price includes tax. Then, a tax-excluded price and the amount of consumption tax can be calculated according to the tax-included price and the consumption tax rate. In a case in which the consumption tax classification is the tax-excluded, the price excludes tax. Then, the tax-included price and the amount of consumption tax can be calculated according to the tax-excluded price and the consumption tax rate. In the meantime, the consumption tax classification for the commodities of the same kind may be common in each tax-free store 4 or different in each tax-free store 4. Further, the consumption tax classification may be different even for each commodity handled in the same tax-free store 4.

The tax exemption category is information for classifying whether the commodity identified by the corresponding commodity code is defined as the consumables, the general goods other than the consumables or a commodity not subject to the tax exemption. For example, in a case in which the category is "1", the CPU 311 of the management server 31 recognizes that the commodity corresponding to the category belongs to the consumables. Similarly, in a case in which the category is "2", the CPU 311 recognizes that the commodity corresponding to the category belongs to the general goods, and in a case in which the category is "3", the CPU 311 recognizes that the commodity corresponding to the category belongs to the commodity not subject to the tax exemption. Furthermore, in a case in which the commodity identified by the corresponding commodity code is a tax-free commodity, no category is set, or a category (number) other than "1", "2" and "3" is set.

The purchaser data file 35 is an area in which various data relating to the nonresident who receives the issue of the tax exemption card C or the tax exemption sheet S at the reception counter 5 of the facility 2, that is, the purchaser who expresses his or her will to purchase the tax exemption commodity at the tax-free store 4 is stored. The management server 31 functions as a storage device.

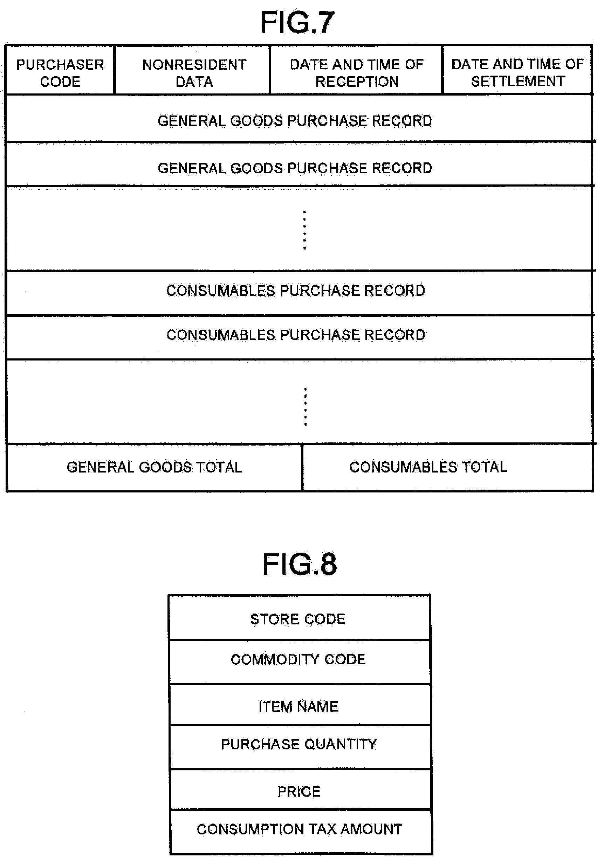

Fig. 7 is a schematic view illustrating main data items stored in the purchaser data file 35. As shown in Fig. 7, in the purchaser data file 35, various data including the purchaser code, nonresident data, reception date and time, settlement date and time, a general goods purchase record, a consumables purchase record, general goods total and consumables total is stored.

The purchaser code is a unique code for individually identifying the purchaser who receives the issue of the tax exemption card C or the tax exemption sheet S at the reception counter 5 of the facility 2. The nonresident data is information recorded on the certificate, presented by the purchaser identified by the corresponding purchaser code, which certifies that the purchaser is the nonresident. For example, in a case in which the certificate which certifies that the purchaser is the nonresident is a passport, a category of the passport, name, passport number, nationality, date of birth, sex and expiration date of the passport are contained in the nonresident data. The reception date and time is date and time on which the purchaser identified by the corresponding purchaser code receives the tax exemption card C or the tax exemption sheet S at the reception counter 5. The settlement date and time is date and time on which the purchaser identified by the corresponding purchaser code carries out a settlement processing at the procedure counter 6.

The general goods purchase record records a data relating to sales of the general goods within the tax exemption commodities purchased by the purchaser identified by the corresponding purchaser code at each tax-free store 4. The consumables purchase record records a data relating to sales of the consumables within the tax exemption commodities purchased by the same purchaser at each tax-free store 4. The general goods purchase record and the consumables purchase record have the common data structure and are respectively created for each tax exemption commodity. The general goods total respectively totals a purchase quantity and the tax-excluded price of the general goods within the tax exemption commodities purchased by the purchaser identified by the corresponding purchaser code at each tax-free store 4. The consumables total respectively totals a purchase quantity and the tax-excluded price of the consumables within the tax exemption commodities purchased by the same purchaser at each tax-free store 4.

Fig. 8 is a schematic view illustrating the data structure contained in the general goods purchase record and the consumables purchase record. As shown in Fig. 8, in the general goods purchase record and the consumables purchase record, the store code, the commodity code, the item name, the purchase quantity, a price and consumption tax amount are contained. The store code, the commodity code, the item name and the purchase quantity are as stated above. The price is the tax-excluded price. The consumption tax amount is the amount of the consumption tax, the alcohol tax and the like levied on the commodity identified by the corresponding commodity code.

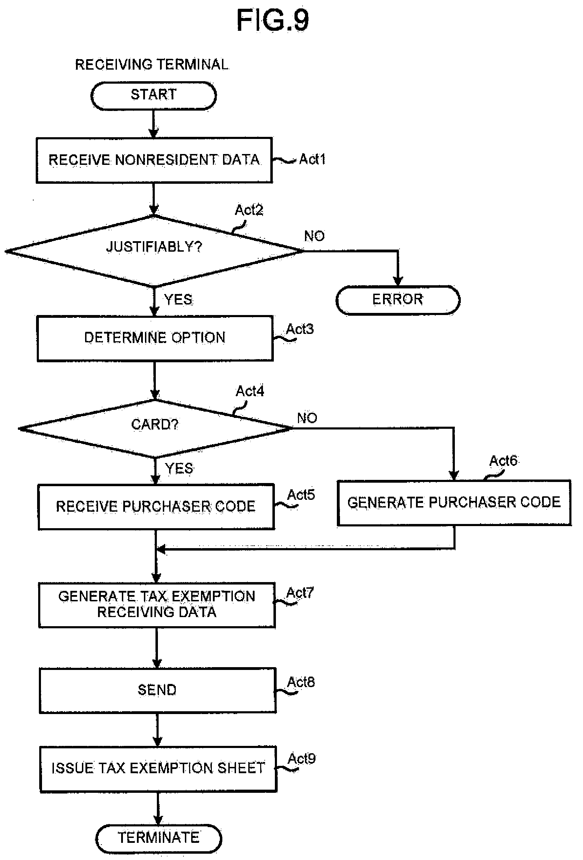

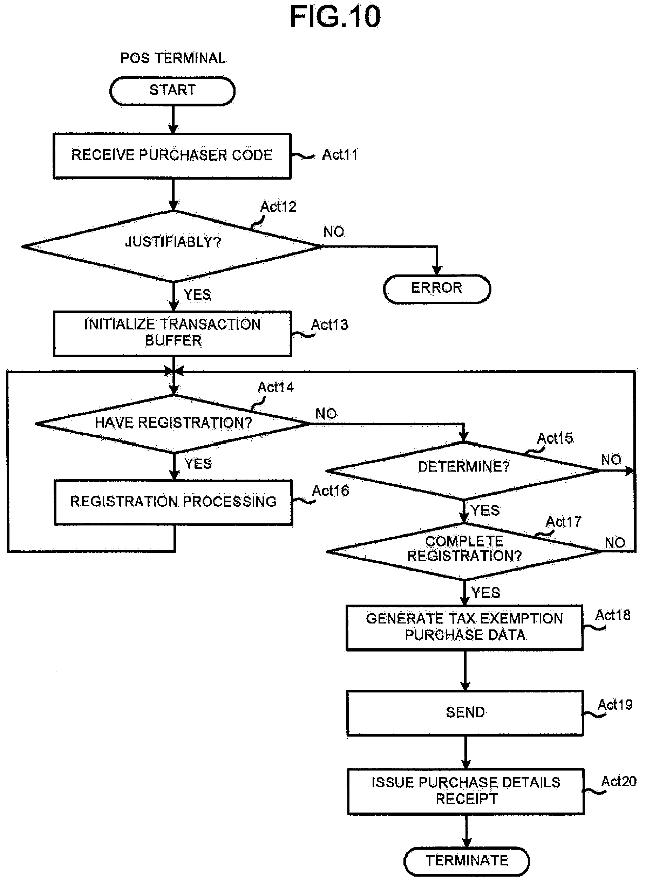

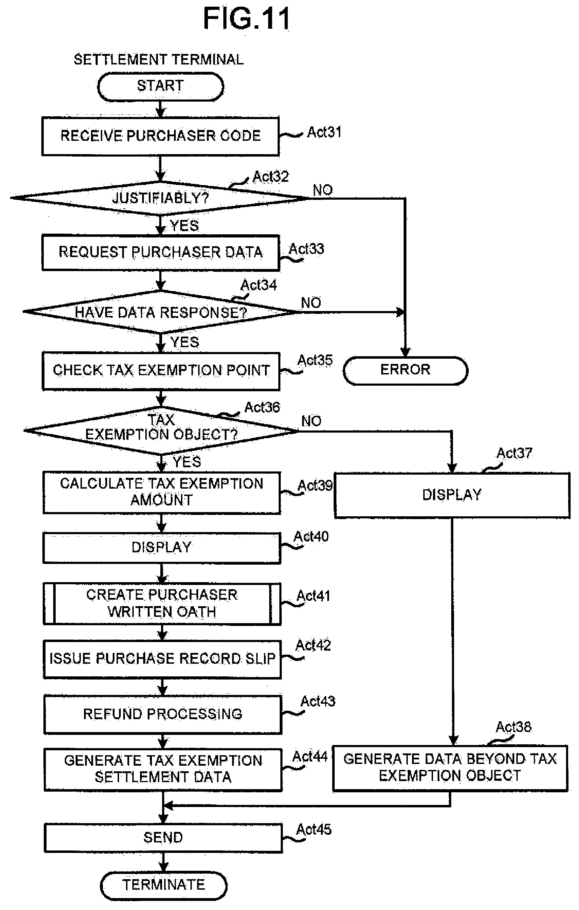

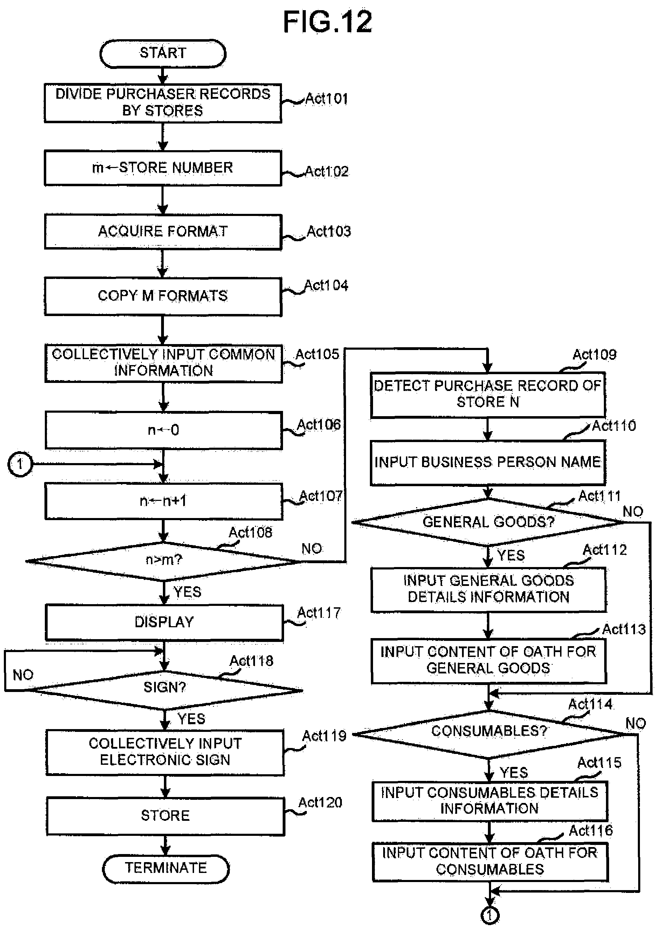

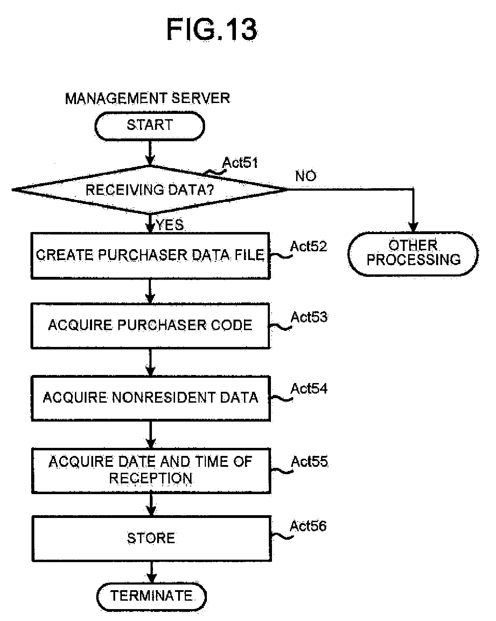

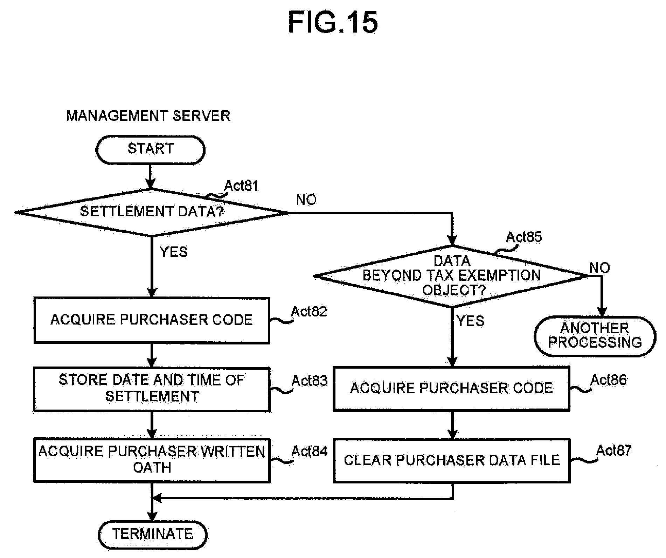

Fig. 9 is a flowchart illustrating main procedures of a control processing carried out by the CPU 501 of the reception terminal 50 according to a control program. Fig. 10 is a flowchart illustrating main procedures of a control processing carried out by the CPU 401 of the POS terminal 40 according to a control program. Fig. 11 and Fig. 12 are flowcharts illustrating main procedures of a control processing carried out by the CPU 601 of the settlement terminal 60 according to a control program. Fig. 13∼Fig. 15 are flowcharts illustrating main procedures of a control processing carried out by the CPU 311 of the management server 31 according to a control program. Hereinafter, operations of the tax exemption processing system 1 are described with the reference to Fig. 9 to Fig. 15. The content of the processing described below is an example, and various processing capable of achieving the same result can be properly used.

First, the admitted tax exemption procedure business provider in the facility 2 respectively deploys a person in charge of a job at the reception counter 5 and a person in charge of a job at the procedure counter 6. The person in charge may concurrently hold the job of the reception counter 5 and the job of the procedure counter 6.

The nonresident such as a foreign tourist who buys commodities at each tax-free store 4 in the facility 2, using the tax exemption system for the commodity tax first goes to the reception counter 5. Then, the nonresident presents his or her passport to the person in charge of the job as the certificate for certifying that he or she is a nonresident. The person in charge of the job starts the reception terminal 50. For example, if the touch panel 507 is touched, the reception terminal 50 is started. If the reception terminal 50 is started, the CPU 501 starts the procedures of a processing, i.e., reception processing, shown in the flowchart of Fig. 9.

First, the CPU 501 receives the nonresident data (Act 1). Specifically, the CPU 501 displays a guidance "Please read information of the passport" on the touch panel 507. The person in charge of the job who confirms the guidance reads character information on a page on which the passport number and the like of the passport presented by the nonresident is recorded with the OCR 52. The character information of the passport read by the OCR 52 is supplied to the CPU 501 via the external device interface 510. The CPU 501 analyzes the character information to receive the passport information such as the category of the passport, name, passport number, nationality, date of birth, sex and expiration date of the passport as the nonresident data.

Next, the CPU 501 determines whether or not the nonresident data is correctly received (Act 2). For example, if the character information read by the OCR 52 is analyzed but a part or whole of the passport information cannot be received, the CPU 501 determines that the nonresident data cannot be received. In a case in which the nonresident data cannot be received (NO in Act 2), the CPU 501 displays, for example, an error message "Information of the passport cannot be read" on the touch panel 507. Through the above, the reception processing is terminated.

In a case in which the nonresident data can be received (YES in Act 2), the CPU 501 determines an option set in the reception terminal 50 (Act 3). The admitted tax exemption procedure business provider issues the tax exemption card C or the tax exemption sheet S at the reception counter 5 to the nonresident who buys commodities in the facility 2. Issuing which one of the tax exemption card C and the tax exemption sheet S is predetermined by the facility 2. In the facility 2 that issues the tax exemption card C, an option of issuing the tax exemption card is preset in the reception terminal 50. In the facility 2 that issues the tax exemption sheet S, an option of issuing tax exemption sheet is preset in the reception terminal 50. Further, there is also a case in which an option of non-issue of the tax exemption card C and the tax exemption sheet S is preset in the reception terminal 50. In this case, neither the tax exemption card nor the tax exemption sheet is issued. These setting of the options is carried out, for example, in such a manner that a person in charge of maintenance of the tax exemption processing system 1 operates the touch panel 507 to set or reset an option flag stored in the RAM 503.

The CPU 501 checks a state of the option flag to identify whether the issue of the tax exemption card C is set, the issue of the tax exemption sheet S is set, or the non-issue of the tax exemption card C and the tax exemption sheet S is set (Act 4).

If the issue of the tax exemption card C is set (YES in Act 4), the CPU 501 receives the purchaser code (Act 5). Specifically, the CPU 501 displays a guidance "Please read data of the tax exemption card C" on the touch panel 507. The person in charge of the job who confirms the guidance takes out one tax exemption card C stocked at the reception counter 5 in advance. The unique code is recorded in the tax exemption card C in advance. The person in charge of the job reads the code recorded in the tax exemption card C taken out with the card reader 508. The code (card data) read by the card reader 508 is supplied to the CPU 501. The CPU 501 receives the unique code of each tax exemption card C as the purchaser code.

On the other hand, if the issue of the tax exemption sheet S or the non-issue of the tax exemption card C and the tax exemption sheet S is set (NO in Act 4), the CPU 501 generates the purchaser code (Act 6). Specifically, the CPU 501 generates the purchaser code according to the passport number in the passport information acquired in the processing in Act 1 and the date and time information clocked by the clock section 505. For example, the CPU 501 sets the code in which the date and time information is added after the passport number as the purchaser code. Otherwise, the CPU 501 sets the code in which the date and time information is added before the passport number as the purchaser code.

If the processing in Act 5 or Act 6 is terminated, the CPU 501 generates the tax exemption receiving data (Act 7). The tax exemption receiving data contains the purchaser code, the nonresident data and the reception date and time. In other words, the CPU 501 generates the tax exemption receiving data by associating the nonresident data received in the processing in Act 1 and the date and time information (reception date and time) clocked by the clock section 505 with the purchaser code received in the processing in Act 5 or the purchaser code generated in the processing in Act 6.

The CPU 501 sends the tax exemption receiving data to the management server 31 (Act 8). Specifically, the CPU 501 notifies the communication interface 506 to send the tax exemption receiving data to the management server 31. After receiving the notification, the communication interface 506 sends the tax exemption receiving data to the management server 31 via the network 7.

The CPU 501 issues the tax exemption sheet S (Act 9). The contents of the issued tax exemption sheet S are different from each other according to the state of the option flag determined in Act 3. Specifically, in a case in which the option of the issue of the tax exemption sheet S is set, the CPU 501 generates a print data of the tax exemption sheet S containing the barcode representing the purchaser code generated in Act 6. In the print data, in addition to the foregoing barcode, the date and time information clocked by the clock section 505, logo information of the facility 2 and text data illustrating a use method of the tax exemption sheet S are contained. Furthermore, if the option of the issue of the tax exemption card C is set, the CPU 501 generates a print data other than the foregoing barcode. The CPU 501 notifies the printer interface 509 to output the print data of the tax exemption sheet S to the printer 51. After receiving the notification, the printer interface 509 outputs the print data of the tax exemption sheet S to the printer 51. Through the foregoing processing, the printer 51 is driven to issue the tax exemption sheet S. Furthermore, if the option of the non-issue of the tax exemption card C and the tax exemption sheet S is set in the reception terminal 50, the foregoing tax exemption sheet S is not issued.

The CPU 311 of the management server 31 that receives the tax exemption receiving data starts an information processing including procedures shown in the flowchart in Fig. 13.

First, the CPU 311 confirms whether or not the receiving data is the tax exemption receiving data (Act 51). If the receiving data is the tax exemption receiving data (YES in Act 51), the CPU 311 creates a new purchaser data file 35 on the auxiliary storage device 314 (Act 52).

Next, the CPU 311 acquires the purchaser code from the tax exemption receiving data (Act 53). The CPU 311 acquires the nonresident data from the tax exemption receiving data (Act 54). Furthermore, the CPU 311 acquires the reception date and time from the tax exemption receiving data (Act 55). The order of the procedures of Acts 53, 54 and 55 may not be limited to this order. The order of the procedures may be in any order as long as the purchaser code, the nonresident data and the reception date and time can be acquired from the tax exemption receiving data.

If the processing in Acts 53, 54 and 55 is terminated, the CPU 311 stores the purchaser code, the nonresident data and the reception date and time acquired from the tax exemption receiving data in the purchaser data file 35 created through the processing in Act 52 (Act 56). Through the above, the CPU 311 terminates the reception processing of the tax exemption receiving data.

If terminating the sending of the tax exemption receiving data, the CPU 501 of the reception terminal 50 displays, for example, a message indicating the completion of the sending on the touch panel 507. Through the above, the CPU 501 terminates the reception processing of the tax exemption receiving data for the nonresident.

The person in charge of the job of the reception counter 5 who confirms the message indicating the completion of the sending of the tax exemption receiving data hands over the tax exemption card C or the tax exemption sheet S to the nonresident. Which one of the tax exemption card C and the tax exemption sheet S is handed over is determined by each facility 2 as stated above. The nonresident can present the tax exemption card C or the tax exemption sheet S to utilize the tax exemption system to purchase a commodity at each tax-free store 4 in the facility 2.

In a case of receiving the presentation of the tax exemption card C or the tax exemption sheet S from the purchaser of the commodity, the store clerk of the tax-free store 4 operates the POS terminal 40 to declare a sales registration of the commodity purchased by the nonresident. For example, a declaration key for declaring the sales registration of the commodity purchased by the nonresident is arranged on the keyboard 408 of the POS terminal 40, and the store clerk operates the declaration key. After operating the declaration key, the store clerk reads the data recorded on the tax exemption card C, using the card reader 412. Otherwise, the store clerk reads the barcode printed on the tax exemption sheet S, using the scanner 411.

If the foregoing declaration key is input, the CPU 401 of the POS terminal 40 starts the information processing including procedures shown in the flowchart in Fig. 10.

First, the CPU 401 receives the purchaser code (Act 11). Specifically, if the data recorded on the tax exemption card C is read by the card reader 412, the CPU 401 receives the data as the purchaser code. Otherwise, if the barcode printed on the tax exemption sheet S is read by the scanner 411, the CPU 401 receives a code obtained by analyzing the barcode as the purchaser code.

Next, the CPU 401 determines whether or not the purchaser code can be correctly received (Act 12). For example, in a case in which the card data read by the card reader 412 is analyzed but the code recorded in the tax exemption card C is not coincident with the code system, the CPU 401 determines that the purchaser code cannot be received. Similarly, in a case in which the system of the code obtained from the barcode read by the scanner 411 is different from the purchaser code generated according to the passport number and the date and time information, the CPU 401 determines that the purchaser code cannot be received. If the purchaser code cannot be received (NO in Act 12), the CPU 401 displays, for example, an error message "Purchaser code cannot be read" on the display 409. Through the above, the information processing in Fig. 10 is terminated.

If the purchaser code can be received (YES in Act 12), the CPU 401 initializes a transaction buffer (Act 13). The transaction buffer is an area for storing the data of the commodity traded as one commodity transaction, and is formed on, for example, the RAM 403.

After initializing the transaction buffer, the CPU 401 confirms presence or absence of the commodity registration (Act 14). Specifically, the CPU 401 confirms whether or not the barcode attached to the commodity is read through the scanner 411, whether or not the commodity code is input through the key input of the keyboard 408, or whether or not a commodity key is touched through the touch panel 414. If the barcode is read, the commodity code is input or the commodity key is touched, the CPU 401 recognizes the presence of the commodity registration.

If the presence of the commodity registration cannot be recognized (NO in Act 14), the CPU 401 confirms presence or absence of a registration determination operation (Act 15). Specifically, the CPU 401 confirms whether or not a determination key on the touch panel 414 is touched. If it is determined that the determination key is touched, the CPU 401 recognizes the presence of the registration determination operation.

If the presence of the registration determination operation cannot be recognized (NO in Act 15), the CPU 401 proceeds to the processing in Act 14 again to confirm the presence or absence of the commodity registration. Thus, the CPU 401 waits for the execution of the commodity registration or the execution of the registration determination operation through the processing in Act 14 and Act 15. Further, in the standby state, in a case in which the input of another key (the numeric keys, the multiplication key and the subtotal key) is detected, the CPU 401 returns to the standby states in Act 14 and Act 15 again after the processing corresponding to the input key is executed.

The store clerk registers the data of the commodity purchased by the purchaser in the POS terminal 40. For example, in a case in which the barcode is attached to the commodity, the store clerk reads the barcode with the scanner 411. In a case in which the barcode is not attached to the commodity, the store clerk inputs the commodity code from the keyboard 408 or touches the commodity key displayed on the screen of the touch panel 414. In this way, if the registration of the data of all the commodities purchased by the purchaser is completed, the store clerk touches the determination key.

In the standby states in Act 14 and Act 15, if the presence of the commodity registration is recognized (YES in Act 14), the CPU 401 carries out a registration processing of the commodity data (Act 16). The registration processing is carried out by the existing POS terminal, and thus the detailed description thereof is omitted. In the POS terminal 40, through the registration processing, purchased commodity data containing the commodity code, the commodity name, the price, the consumption tax amount, a sales quantity and the sales amount is stored in the transaction buffer as information relating to the sales of the commodity purchased by the purchaser.

If the registration processing is terminated, the CPU 401 proceeds to the processing in Act 14 again to confirm the presence or absence of the commodity registration. Thus, each time the presence of the commodity registration is recognized, the CPU 401 repeatedly carries out the registration processing in Act 16. In this way, the information relating to the sales of the commodity purchased by the purchaser is collectively stored in the transaction buffer.

In the standby states in Act 14 and Act 15, if the presence of the registration determination operation is recognized (YES in Act 15), the CPU 401 determines whether or not the commodity or commodity data is already registered(Act 17). If the purchased commodity data is not stored in the transaction buffer, the commodity is not yet registered. In this case (NO in Act 17), the CPU 401 proceeds to the processing in Act 14 again to recognize the presence or absence of the commodity registration.

In a case in which the purchased commodity data is stored in the transaction buffer and thus the registration of the commodity is recognized (YES in Act 17), the CPU 401 generates the tax exemption commodity purchase data (Act 18). Specifically, the CPU 401 generates the tax exemption commodity purchase data by associating the purchaser code received in the processing in Act 11 and the store code set in the auxiliary storage device 404 in advance with the purchased commodity data stored in the transaction buffer.

The CPU 401 sends the tax exemption commodity purchase data to the management server 31 (Act 19). Specifically, the CPU 401 notifies or instructs the communication interface 406 to send the tax exemption commodity purchase data to the management server 31. After receiving the notification, the communication interface 406 sends the tax exemption commodity purchase data to the management server 31 via the network 7.

If the sending processing is terminated, the CPU 401 controls the issue of the purchase details receipt (Act 20). Specifically, the CPU 401 generates print data of the purchase details receipt on the basis of the purchased commodity data stored in the transaction buffer. Then, the CPU 401 outputs the print data to the receipt printer 410 to print the purchase details receipt. The printed purchase details receipt is issued from an issuing port, and thus the store clerk hands over the purchase details receipt to the purchaser.

Through the above, the CPU 401 terminates the registration processing of the commodity purchased by the nonresident.

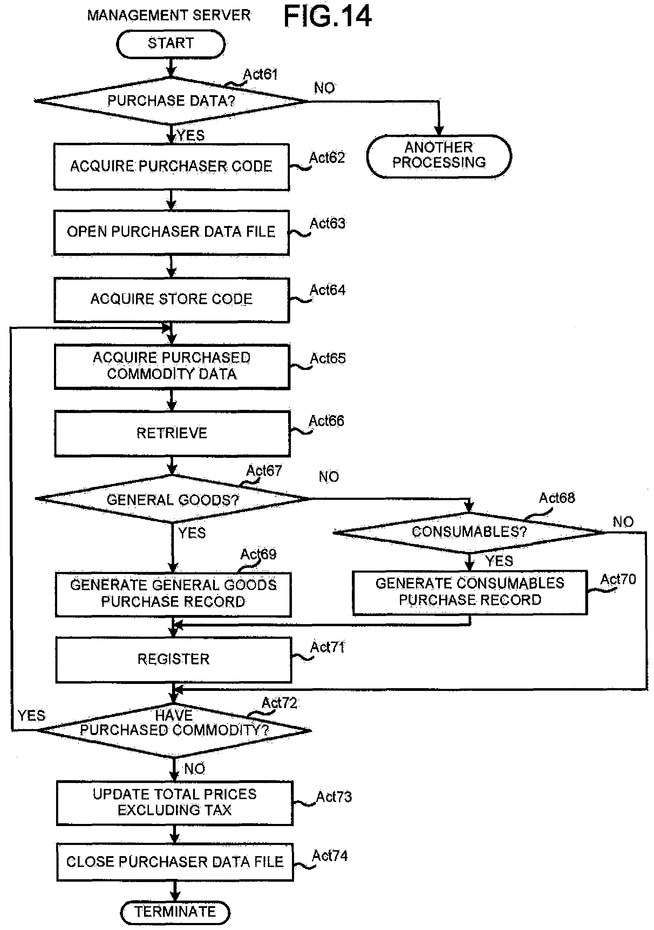

The CPU 311 of the management server 31 receiving the tax exemption commodity purchase data starts an information processing including procedures shown in the flowchart in Fig. 14.

First, the CPU 311 confirms whether or not the receiving data is the tax exemption commodity purchase data (Act 61). If the receiving data is the tax exemption commodity purchase data (YES in Act 61), the CPU 311 acquires the purchaser code from the tax exemption commodity purchase data (Act 62). Then, the CPU 311 reads out the purchaser data file 35 containing the acquired purchaser code from the auxiliary storage device 314 and copies the purchaser data file 35 on the RAM 313 to open the purchaser data file 35 (Act 63).

Next, the CPU 311 acquires the store code from the tax exemption commodity purchase data (Act 64). The CPU 311 also acquires the purchased commodity data from the tax exemption commodity purchase data (Act 65). In a case in which a plurality of the purchased commodity data is contained in the tax exemption commodity purchase data, the CPU 311 selectively acquires one of the purchased commodity data.

The CPU 311 retrieves the tax exemption commodity database 34 by taking the store code acquired in the processing in Act 64 and the commodity code contained in the purchased commodity data acquired in the processing in Act 65 as keys for retrieval (Act 66). Then, the CPU 311 determines the tax exemption classification of a record in which the store code and the commodity code are coincident with the keys for retrieval. In other words, the CPU 311 confirms whether or not the tax exemption classification indicates the general goods (Act 67). If the tax exemption classification does not indicate the general goods (NO in Act 67), the CPU 311 confirms whether or not the tax exemption classification indicates the consumables (Act 68). If the tax exemption classification does not indicate the consumables (NO in Act 68), the CPU 311 proceeds to the processing in Act 72. Such a procedure is carried out in a case in which the commodity identified by the corresponding commodity code is a commodity not subject to the tax exemption or a tax-free commodity.

On the other hand, if the tax exemption classification indicates the general goods (YES in Act 67), the CPU 311 generates the general goods purchase record (Act 69). In other words, the CPU 311 generates the general goods purchase record according to the store code acquired in the processing in Act 64 and the commodity code, the item name, the purchase quantity, the price and the consumption tax amount in the purchased commodity data acquired in the processing in Act 65. Further, if the tax exemption classification indicates the consumables (YES in Act 68), the CPU 311 generates the consumables purchase record (Act 70). In other words, the CPU 311 generates the consumables purchase record according to the store code acquired in the processing in Act 64 and the commodity code, the item name, the purchase quantity, the price and the consumption tax amount in the purchased commodity data acquired in the processing in Act 65. In this way, if the general goods purchase record or the consumables purchase record is generated, the CPU 311 registers the generated record in the purchaser data file 35 on the RAM 43 (Act 71). Then, the CPU 311 proceeds to the processing in Act 72.

In Act 72, the CPU 311 determines whether or not the purchased commodity data which is not acquired yet in the processing in Act 65 exists in the tax exemption commodity purchase data. If such purchased commodity data exists (YES in Act 72), the CPU 311 returns to the processing in Act 65. Then, the CPU 311 repeats the processing subsequent to Act 65 in the same way as described above.

In this way, as to all the purchased commodity data contained in the tax exemption purchase data, after the processing subsequent to Act 65 is executed (NO in Act 72), the CPU 311 updates each data of the total of the general goods and the total of the consumables in the purchaser data file 35 (Act 73). Specifically, the CPU 311 respectively totals the purchase quantity, the price, the consumption tax amount of each general goods purchase record registered in the purchaser data file 35 and overwrites the general goods total data in the purchaser data file 35 with them. Similarly, the CPU 311 respectively totals the purchase quantity, the price, the consumption tax amount of each consumables purchase record registered in the purchaser data file 35 and overwrites the consumables total data in the purchaser data file 35 with them.

Afterwards, the CPU 311 stores the purchaser data file 35 on the RAM 43 in the auxiliary storage device 314 in an overwritten manner to close the purchaser data file 35 (Act 74). Through the above, the CPU 311 terminates the reception processing of the tax exemption commodity purchase data.

The nonresident who finishes the shopping in each tax-free store 4 goes to the procedure counter 6. Then, the nonresident presents the tax exemption card C or the tax exemption sheet S to the person in charge of the job.

In a case of receiving the presentation of the tax exemption card C or the tax exemption sheet S from the nonresident, the person in charge of the job starts the settlement terminal 60. For example, if the touch panel 507 is touched, the settlement terminal 60 is started. If the settlement terminal 60 is started, the CPU 601 starts a processing including procedures, i.e., settlement processing, shown in the flowchart in Fig. 11.

First, the CPU 601 receives the purchaser data (Act 31). Specifically, the CPU 601 displays a guidance such as "Please read data of the tax exemption card" or "Please scan barcode of the tax exemption sheet" on the touch panel 607. The person in charge of the job who confirms the guidance reads the data recorded on the tax exemption card C presented by the nonresident with the card reader 609. Otherwise, the person in charge of the job reads the barcode printed on the tax exemption sheet S presented by the nonresident with the scanner 608. If the data recorded on the tax exemption card C is read by the card reader 609, the CPU 601 receives the data as the purchaser code. If the barcode printed on the tax exemption sheet S is read by the scanner 608, the CPU 601 receives a code obtained by analyzing the barcode as the purchaser code. The computer containing the CPU 601 as the main part thereof functions as a first reception module for receiving the purchaser code of the purchaser who receives the refund on the purchased commodity.

Next, the CPU 601 determines whether or not the purchaser code can be correctly received (Act 32). For example, in a case in which the card data read by the card reader 609 is analyzed but the code recorded on the tax exemption card C is not coincident with the code system, the CPU 601 determines that the purchaser code cannot be received. Similarly, in a case in which the system of the code obtained from the barcode read by the scanner 608 is different from the system of the purchaser code generated according to the passport number and the date and time information, the CPU 601 determines that the purchaser code cannot be received. If the purchaser code cannot be received (NO in Act 32), the CPU 601 displays an error message, for example, "Purchaser code cannot be read" on the touch panel 607. Through the above, the CPU 601 terminates the settlement processing.

If the purchaser code can be received (YES in Act 32), the CPU 601 requests the purchaser data file 35 to the management server 31 (Act 33). Specifically, the CPU 601 generates an inquiry command of the purchaser data file 35 containing the purchaser code received in the processing in Act 31 and notifies the communication interface 606 to send the inquiry command to the management server 31. After receiving the notification, the communication interface 606 sends the inquiry command to the management server 31 via the network 7.

The CPU 311 of the management server 31 that receives the inquiry command retrieves the purchaser data file 35 in which the purchaser code in the command is set. If the purchaser data file 35 is detected, the CPU 311 sends the purchaser data file 35 to the settlement terminal 60 serving as a sender of the inquiry command via the network 7.

The CPU 601 that sends the inquiry command confirms the presence or absence of a response of the purchaser data file 35 (Act 34). If there is no response of the purchaser data file 35 (NO in Act 34), the CPU 601 displays an error message, for example, "Purchaser data file cannot be acquired" on the touch panel 607. Through the above, the CPU 601 terminates the settlement processing.

If there is a response of the purchaser data file 35 (YES in Act 34), the CPU 601 stores the purchaser data file in a working area of the RAM 313. The computer including the CPU 601 as a main part thereof functions as a second reception module for receiving the purchase data file 35 associated with the purchaser code received by the first reception module from the management server 31.

Then, the CPU 601 executes the following processing for the purchaser data file received from the management server 31. In other words, the CPU 601 checks the tax exemption point (Act 35). Specifically, the CPU 601 confirms whether or not the amount (total of the tax-excluded prices) of the general goods total data stored in the purchaser data file 35 is equal to or greater than the lower limit amount "10,001" authorized as the tax exemption point. Further, the CPU 601 confirms whether or not the amount (total of the tax-excluded prices) of the consumables total data stored in the purchaser data file 35 is in a range of the amount from the lower limit amount "5,001" to the upper limit amount "500,000" authorized as the tax exemption points.

In this way, the tax exemption point is checked, and then the CPU 601 determines whether or not it is the tax exemption item (Act 36). Specifically, if the amount of the general goods total data is equal to or greater than the lower limit amount authorized as the tax exemption point of the general goods or if the amount of the consumables total data is in the range of the amount from the lower limit amount to the upper limit amount authorized as the tax exemption points of the consumables in the processing in Act 35, the CPU 601 authorizes it as the tax exemption item. If the amount of the general goods total data is smaller than the lower limit amount authorized as the tax exemption point of the general goods or if the amount of the consumables total data is less than the lower limit amount or greater than the upper limit amount authorized as the tax exemption points of the consumables, the CPU 601 does not authorize it as the tax exemption item.

If it is authorized that it is not the tax exemption item (NO in Act 36), the CPU 601 displays a message, for example, "It is not a tax exemption item" (Act 37) on the touch panel 607. The CPU 601 generates a data indicating the outside of tax exemption (Act 38). The purchaser code received in the processing in Act 31 is contained in the data indicating the outside of tax exemption. Afterwards, the CPU 601 proceeds to the processing in Act 45.

On the other hand, if it is determined that it is the tax exemption item (YES in Act 36), the CPU 601 calculates tax exemption amount (Act 39). Specifically, the CPU 601 calculates the sum of the consumption tax amount of the general goods total data and the consumption tax amount of the consumables total data stored in the purchaser data file 35. In this way, the tax exemption amount is calculated, and then the CPU 601 displays the tax exemption amount on the touch panel 607 as the amount of refund (Act 40). For example, the CPU 601 displays a message "Tax exemption amount XXX yen is refunded" on the touch panel 607. Thus, the person in charge of the job can identify whether or not the nonresident is subject to the tax exemption according to the display content of the touch panel 607. The display device for displaying the amount of tax levied on the taxable commodity as the amount of refund may not be limited to the touch panel 607 and may be the pen tablet 62.

Next, the CPU 601 creates the purchaser written oath which is one of the electronic documents required for the tax exemption measure based on the data of the purchaser data file 35 (Act 41). It is necessary for each tax-free store 4 to create the purchaser written oath. The CPU 601 creates the purchaser written oath for each tax-free store 4 according to the procedures shown in the flowchart in Fig. 12.

First, the CPU 601 classifies the general goods purchase record and the consumables purchase record stored in the purchaser data file 35 by each store code (Act 101). In other words, the general goods purchase record and the consumables purchase record, which contain the same store code, are classified into one group. The CPU 601 counts the number of classified store codes m (Act 102). The CPU 601 stores the number m as the number of stores m.

The CPU 601 reads out a format data of the purchaser written oath from the auxiliary storage device 604 (Act 103). The format data of the purchaser written oath is stored in the auxiliary storage device 604 in advance. The format data forms item columns required in the purchaser written oath. The item columns include a purchase date column, a signature column, a business person name column, a purchaser full name column, a date of birth column, a category column of the passport, a passport number column, a nationality column, a sex column, an expiration date of the passport column, a details column (item name, price, total price and the like) of all the purchased commodities classified as the general goods, a details column (item name, price, total price and the like) of all the purchased commodities classified as the consumables, the content of the oath column and the like.

The CPU 601 copies the format data by the number of copies equal to the number of stores m (Act 104). However, in a case in which the number of stores m is "1", the CPU 601 does not copy the format data.

The CPU 601 inputs a common information including a purchase date, a purchaser full name, a date of birth, a category of the passport, a passport number, a nationality, a sex, an expiration date of the passport to all the format data (Act 105). Specifically, the CPU 601 acquires the reception date and time data from the purchaser data file 35 to input it to the purchase date column of the format data. The date and time clocked by the clock section 605 may be input into the purchase date column as the purchase date. The CPU 601 acquires a nonresident data from the purchaser data file 35. The CPU 601 inputs each information including the purchaser full name, the date of birth, the category of the passport, the passport number, the nationality, the sex and the expiration date of the passport contained in the data to the same item columns of format data correspondingly.

If the input of the common information is completed, the CPU 601 resets a counter n to "0" (Act 106). Next, the CPU 601 increases the counter n by "1" (Act 107). Then, every time the counter n is increased by one, the CPU 601 determines whether or not the counter n is greater than the number of stores m (Act 108). If it is determined that the counter n is not greater than the number of stores m, the CPU 601 executes the processing from Act 109 to Act 116. If it is determined that the counter n is greater than the number of stores m, the CPU 601 executes the processing from Act 117 to Act 120.

In other words, if it is determined that the counter n is not greater than the number of stores m (NO in Act 108), the CPU 601 detects the purchase record of a first store from the purchase records classified by the store code (Act 109). The CPU 601 selects one format data to which the business person name is not input from m format data (Act 110). The CPU 601 inputs the business person name identified according to the store code commonly contained in the detected purchase record to the business person name of the format data. A data table in which the business person name of the tax-free store is set in association with the store code of each tax-free store 4 is stored in the auxiliary storage device 604. The CPU 601 refers to the data table to input the business person name to the format data.

Next, the CPU 601 determines whether or not there is the general goods purchase record in the detected purchase record (Act 111). If it is determined that there is the general goods purchase record (YES in Act 111), the CPU 601 inputs the item names, purchase quantities, the lists of the prices and the total of the prices of all the general goods purchase records to the details column of the general goods in the selected format data (Act 112). Further, the CPU 601 inputs a text data indicating the content of the oath for the general goods to the content of the oath column of the selected format data (Act 113). The text data in native language indicating the content of the oath for the general goods is stored in the auxiliary storage device 604. The CPU 601 reads out the text data from the auxiliary storage device 604 to input it to the format data. If it is determined that there is no general goods purchase record in the detected purchase record (NO in Act 111), the CPU 601 does not execute the processing in Act 112 and Act 113.

Next, the CPU 601 determines whether or not there is the consumables purchase record in the detected purchase record (Act 114). If it is determined that there is the consumables purchase record (YES in Act 114), the CPU 601 inputs the item names, purchase quantities, the list of the prices and the totals of the prices of all the consumables purchase records to the details column of the consumables in the selected format data (Act 115). Further, the CPU 601 inputs a text data indicating the content of the oath for the consumables to the content of the oath column of the selected format data (Act 116). The text data in native language indicating the content of the oath for the consumables is stored in the auxiliary storage device 604. The CPU 601 reads out the text data from the auxiliary storage device 604 to input it to the format data. If it is determined that there is no consumables purchase record in the detected purchase record (NO in Act 114), the CPU 601 does not execute the processing in Act 115 and Act 116.

Thus, through the execution of the processing from Act 109 to Act 116 by the CPU 601, the electronic data of the purchaser written oath is created for one tax-free store. Until the value n of the counter is greater than the number of stores m, the electronic data of the purchaser written oath is created for each tax-free store through the execution of the processing from Act 109 to Act 116 by the CPU 601.

Further, in the above description, the general goods purchase record is processed first, and then the consumables purchase record is processed; however, the order is not limited to this. First the consumables purchase record may be processed, and then the general goods purchase record may be processed. The computer including the CPU 601 as the main part thereof functions as a creation module for creating the purchaser written oath based on the information described in the certificate and the information relating to the sales of the commodity in the purchaser data file 35.

If the value n of the counter is greater than the number of stores m (YES in Act 108), the CPU 601 displays the refund amount and the purchaser written oath of each tax-free store on the touch panel 607 based on the electronic data created through the processing in Act 101∼Act 116 (Act 117). The display method is not limited to this. A plurality of the purchaser written oaths may be collectively displayed, or the purchaser written oaths may be displayed one by one. In the meantime, in this stage, the signature column of each purchaser written oath is a blank. Thus, the person in charge of the job requests the nonresident to sign (electronic sign) on the pen tablet 62.

The CPU 601 that displays the purchaser written oath receives the input of the electronic sign (Act 118). Specifically, the CPU 601 acquires the handwriting data from the pen table 62 via the external device interface 611. Then, the CPU 601 stores the handwriting data as the electronic signature by the purchaser, i.e., nonresident, in the working area.

The CPU 601 that stores the electronic signature in the working area inputs the electronic signature to the signature column of the electronic data in all the purchaser written oaths created for each tax-free store (Act 119). Thus, the signature (electronic sign) is displayed in each signature column of the purchaser written oath displayed on the touch panel 607 for each tax-free store. The computer including the CPU 601 as the main part thereof functions as a signature module for inputting the electronic signature detected by the detection device (pen tablet) for the electronic signature to the signature column of the purchaser written oath.

Then, the CPU 601 stores the electronic data of the purchaser written oath in which the electronic signature data is input to the signature column in the RAM 603 or the auxiliary storage device 604 (Act 110). In this way, the CPU 601 terminates the creation processing of the purchaser written oath. The computer including the CPU 601 as the main part thereof functions as an output module for outputting the electronic data of the purchaser written oath in which the electronic signature is input to the signature column to the auxiliary storage device 604.

Return to the description of the processing in Fig. 11. The CPU 601 that terminates the creation processing of the purchase written oath issues the purchase record slip based on the data of the purchaser data file 35 (Act 42). The purchase record slip records information (full name or store name) of a seller, information (full name, date of birth, passport number and the like) of the purchaser, the date of the purchase, information (item name, tax-excluded selling price, sales quantity, total amount of tax-excluded prices and the like) relating to purchased commodity and important points. Thus, in the auxiliary storage device 604 of the settlement terminal 60, a layout data of the purchase record slip in which the important points are recorded in native language is stored. The CPU 601 arranges the data of the record items acquired from the purchaser data file 35 in the layout data to complete a print data of the purchase record slip. Then, the CPU 601 notifies the printer interface 610 to output the print data of the purchase record slip to the printer 61. After receiving the notification, the printer interface 610 outputs the print data of the purchase record slip to the printer 61. Through the processing described above, the printer 61 is driven to print the purchase record slip, and thus the purchase record slip is issued.

Next, the CPU 601 carries out a refund processing (Act 43). Specifically, the CPU 601 notifies the external device interface 612 to output the dispensing data of the tax exemption amount (amount of refund) calculated in the processing in Act 39 to the money dispensing machine 63. Upon reception of the notification, the external device interface 612 outputs the dispensing data to the money dispensing machine 63. Through the foregoing processing, the money dispensing machine 63 is driven, and cash equivalent to the tax exemption amount is dispensed.

Next, the CPU 601 generates the tax exemption settlement data (Act 44). Specifically, the CPU 601 generates the tax exemption settlement data by associating the date and time data (settlement date and time) clocked by the clock section 605 and the electronic data of the purchaser written oath created in the processing in Act 41 with the purchaser code acquired in the processing in Act 31. In this way, the CPU 601 generates the tax exemption settlement data and proceeds to the processing in Act 45.

In Act 45, the CPU 601 sends the tax exemption settlement data generated in the processing in Act 44 or the data indicating the outside of tax exemption generated in the processing in Act 38 to the management server 31. Specifically, the CPU 601 notifies the communication interface 606 to send the tax exemption settlement data or the data of the outside of tax exemption to the management server 31. After receiving the notification, the communication interface 606 sends the tax exemption settlement data or the data of the outside of tax exemption to the management server 31 via the network 7. The computer including the CPU 601 as the main part thereof functions as an output module for outputting the electronic data of the purchaser written oath in which the electronic signature is input to the signature column to the management server 31.

The CPU 311 of the management server 31 that receives the tax exemption settlement data or the data of the outside of tax exemption starts an information processing including procedures shown in the flowchart in Fig. 15.

First, the CPU 311 confirms whether or not the receiving data is the tax exemption settlement data (Act 81). If the receiving data is the tax exemption settlement data (YES in Act 81), the CPU 311 acquires the purchaser code from the tax exemption settlement data (Act 82). Then, the CPU 311 stores the data of the settlement date and time contained in the tax exemption settlement data in the purchaser data file 35 containing the acquired purchaser code (Act 83).

Next, the CPU 311 acquires the electronic data of the purchaser written oath from the tax exemption settlement data and stores the electronic data in the auxiliary storage device 314 (Act 84). Through the above, the CPU 311 terminates the reception processing of the tax exemption settlement data.

On the other hand, if the receiving data is not the tax exemption settlement data (NO in Act 81), the CPU 311 confirms whether or not the receiving data is the data of the outside of tax exemption (Act 85). If the receiving data is the data of the outside of tax exemption (YES in Act 85), the CPU 311 acquires the purchaser code from the data of the outside of tax exemption (Act 86). Then, the CPU 311 deletes the purchaser data file 35 containing the acquired purchaser code from the auxiliary storage device 314 (Act 87). Through the above, the CPU 311 terminates the reception processing of the data of the outside of tax exemption object.

In this way, in the facility 2 where the tax exemption processing system 1 of the present embodiment is constructed, the nonresident such as a foreign tourist who presents the certificate such as a passport for certifying that he or she is subject to the tax exemption at the reception counter 5 receives the issue of the tax exemption card C or the tax exemption sheet S from the person in charge of the job at the reception counter 5. Afterwards, the nonresident presents the tax exemption card C or the tax exemption sheet S to the store clerk to do the shopping at the tax-free store 4. Then, if the shopping in the facility 2 is ended, the nonresident goes to the procedure counter 6 to present the tax exemption card C or the tax exemption sheet S to the person in charge of the job. The person in charge of the job at the procedure counter 6 carries out an operation of reading the data of the tax exemption card C or the barcode of the tax exemption sheet S through the settlement terminal 60.

Thus, in the settlement terminal 60, the information relating to the sales of the commodity purchased by the nonresident at each tax-free store 4 in the facility 2 is collected from the management server 31. Then, it is automatically checked on the basis of the information whether or not the purchased commodity is subject to the tax exemption. If the commodity is subject to the tax exemption, the total of the amount of tax levied on the commodity serving as a taxable object, i.e., the tax exemption amount, is displayed on the touch panel 607 as the amount of refund. Then, at the procedure counter 6, the cash equivalent to the amount of refund is dispensed from the money dispensing machine 63.

Thus, conventionally, the person in charge of the job at the procedure counter 6 divides the commodities subject to the tax exemption purchased by the purchaser into the consumables and the general goods other than the consumables on the basis of the information of the receipt received by the purchaser (nonresident) from each tax-free store 4 and respectively totals the tax-excluded prices for the consumables and the general goods to determine whether or not the commodities are subject to the tax exemption. However, these procedures can be wholly simplified. If the commodities are subject to the tax exemption, the calculation with which the tax exemption amount is derived is also unnecessary. As a result, as the procedures of the tax exemption measure carried out at the procedure counter 6 are simplified, excellent effects such as the reduction to the burden of the person in charge of the job and the time savings on the procedures are achieved.

In some cases, it is not required for the nonresident to present the passport at each tax-free store 4. Because of this, each tax-free store 4 is not required to prepare the OCR 52 for reading the information of the passport, and the existing POS terminal 40 provided with the scanner 411 and the card reader 412 can be applied as hardware without performing any modification. Thus, the tax-free store 4 can be easily converted to the procedure consignment type tax-free store without increasing an equipment cost.

Furthermore, as described above, the nonresident may not present the passport at each tax-free store 4, and therefore a risk of missing the passport, e.g., thief, lost and the like, can be reduced. In addition, the nonresident may not present the receipt at the procedure counter 6. Thus, the nonresident is also not required to keep the receipts issued at each tax-free store 4 in a wallet and the like without missing the receipts. Therefore, a system with a high efficiency and a good user friendliness for the nonresident is realized.

Further, in the tax exemption processing system 1 of the present embodiment, the documents necessary for the tax exemption measure such as the purchaser written oath and the purchase record slip are automatically generated by the settlement terminal 60 on the basis of the information, recorded on the certificate such as a passport, which is read by the OCR 52 at the reception counter 5. In particular, the purchase written oath is automatically created for each tax-free store at which the nonresident purchases the general goods or consumables. In the signature columns of the purchase written oaths, the electronic signature input to the pen tablet 62 by the nonresident is collectively input. Thus, the person in charge of the job at the procedure counter 6 is also unnecessary to create these documents in handwriting. As the purchaser, i.e., nonresident, may only sign on the pen tablet 62 once even if there is a plurality of the necessary purchase written oaths, the burden of the purchaser can be reduced and service quality can be improved.

The purchaser written oath created by the settlement terminal 60 is transferred to the management server 31 to be stored therein as an electronic data. Thus, each tax-free store 4 has an obligation of storing the purchaser written oath for seven years from the day on which two months elapses from the next day of the last day of the taxable period to which the day on which the tax exemption sales is carried out at each tax-free store 4 belongs; however, according to the present embodiment, each tax-free store 4 is not required to individually store the purchaser written oath. In other words, there is an advantage in that the storage job at each tax-free store 4 can also be simplified.

Further, the present invention is not limited to the foregoing embodiment.

For example, in the foregoing embodiment, the selection of issuing either the tax exemption card C or the tax exemption sheet S to the nonresident is set on the reception terminal 50; however, the selection may be omitted. In other words, in the flowchart in Fig. 9, if the result of the determination of the processing in Act 2 is "YES", a control program may be formed to make the flow proceed to the processing in Act 5. Otherwise, if the result of the determination of the processing in Act 2 is "YES", a control program may be formed to make the flow proceed to the processing in Act 6. In the former modification, the operation is limited to the use of the tax exemption card C. Thus, in the POS terminal 40, the reception terminal 50 and the settlement terminal 60, the card readers 412, 508 and 609 may not be required. In the latter modification, the operation is limited to the use of the tax exemption sheet S. Thus, in the POS terminal 40 and the settlement terminal 60, the scanners 411 and 608 may not be required.

Further, in the foregoing embodiment, the reception terminal 50 converts the purchaser code generated according to the passport number and the date and time information to the barcode and prints the barcode representing the purchaser code on the tax exemption sheet S; however, the reception terminal 50 may be equipped with a card reader/writer, instead of the card reader 508, to record the purchaser code generated according to the passport number and the date and time information on the tax exemption card C. Similarly, the reception terminal 50 may include a random number generator to generate a unique purchaser code with a random number to issue the tax exemption sheet S on which the barcode of the purchaser code is printed.

Further, in the embodiment, the purchase written oath is exemplified as a document created by the creation module; however, the present embodiment is not limited to the purchase written oath. Even other electronic documents required for the tax exemption measure may also be applied as long as the signature is required on the document.

In the embodiment described above, a module for outputting data of the purchase written oath to the auxiliary storage device 604 and a module for sending a data of the purchase written oath to the management server 31 is exemplified as an output module. However, the output module is not limited to these modules. For example, the output module may include a module for outputting (displaying) a data of the purchase written oath to the touch panel 607 and a module for outputting (printing) data of the purchase written oath by the printer 61.

In the embodiment, the pen tablet 62 is connected to the settlement terminal 60; however, it is not limited to this. The pen tablet may be connected with the reception terminal 50. In this case, the nonresident signs on the pen tablet 62 at the time of receiving the issue of the tax exemption card C or the tax exemption sheet S from the person in charge of the job at the reception counter 5. After receiving the handwriting data from the pen tablet 62, the CPU 501 of the reception terminal 50 contains the handwriting data in the tax exemption receiving data as the electronic sign data of the nonresident and sends the tax exemption receiving data to the management server 31. The CPU 311 of the management server 31 stores the electronic sign data in the purchaser data file 35 together with the purchaser code, the nonresident data and the reception date and time. The CPU 601 of the settlement terminal 60 receives the electronic sign data from the purchaser data file 35 instead of receiving the input of the electronic sign in the processing in Act 118 in Fig. 12. In this case also, the procedures of signing a plurality of the purchaser written oaths by the nonresident in handwriting can also be simplified.

Further, in the foregoing embodiment, the electronic data of the purchaser written oath created by the settlement terminal 60 is stored in the management server 31. With regard to this point, the electronic data of the purchaser written oath is sent to the computer of the corresponding tax-free store and may be stored at each tax-free store. A store server connected with, for example, the POS terminal 40 is considered as the computer.

Further, in the foregoing embodiment, a function as the storage device is applied to the management server 31; however, the function as the storage device may also be applied to, for example, the reception terminal 50 or the settlement terminal 60 other than the management server 31.

Further, in the foregoing embodiment, a case in which the total amount of tax levied on the taxable commodities is refunded is described; however, even a case in which a part of the amount of tax is refunded is applicable by changing a calculation method of the amount of refund. Further, it is needless to say that the amount of the tax exemption point serving as a reference amount of the tax exemption is not limited to the reference amount in the embodiment.

Further, the transfer of the POS terminal 40, the reception terminal 50 and the settlement terminal 60 is generally carried out in a state in which a program such as a control program is stored in the ROM. However, the present embodiment is not limited to this and the control program transferred separately from a computer device may be written into a writable storage device included in the computer device according to an operation of a user. The transfer of the control program is recorded in a removable recording medium or can be carried out by communication via a network. If the recording medium like a CD-ROM, a memory card and the like can store the program and can be read by a device, the form thereof is not limited. Furthermore, functions obtained by installation or downloading of the program may be realized through the cooperation with an OS (Operating System) inside the device.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. A tax exemption processing system, comprising: an information processing apparatus and a storage device, wherein
the storage device includes:
a purchaser data file which stores information recorded in a certificate for certifying that a purchaser who purchases a commodity is subject to a tax exemption and information relating to a sales of the commodity purchased by the purchaser in association with a purchaser code for identifying the purchaser; and
the information processing apparatus includes:
a first reception module configured to receive the purchaser code of the purchaser who receives a refund on the commodity purchased;
a second reception module configured to receive the purchaser data file associated with the purchaser code received by the first reception module from the storage device;
a creation module configured to create an electronic document, having a signature column, which is required for a tax exemption measure based on the information recorded in the certificate and the information relating to the sales of the commodity in the purchaser data file received by the second reception module;
a signature module configured to input an electronic signature detected by a detection device for detecting the electronic signature to the signature column of the electronic document; and
an output module configured to output data of the electronic document in which the electronic signature is input to the signature column.

2. The tax exemption processing system according to the claim 1, wherein
the output module further contains a module for sending data of the electronic document to the storage device; and
the storage device outputs the data of the electronic document received from the information processing apparatus to a storage device for keeping the data of the electronic document for a specified period.

3. The tax exemption processing system according to the claim 1 or 2, wherein
the creation module creates the electronic document the number of which corresponds to a required number thereof obtained from the information relating to the sales of the commodity; and
the signature module inputs the electronic signature to signature columns of all the electronic documents created by the creation module.

4. An information processing apparatus, comprising:
a first reception module configured to receive a purchaser code for identifying a purchaser who receives a refund on a commodity purchased;
a second reception module configured to receive a purchaser data file associated with the purchaser code received by the first reception module from a storage device which stores the purchaser data file in which information recorded in a certificate for certifying that the purchaser identified by the purchaser code is subject to a tax exemption and information relating to sales of the commodity purchased by the purchaser are associated with the purchaser code;
a creation module configured to create an electronic document, having a signature column, which is required for a tax exemption measure based on the information recorded in the certificate and the information relating to the sales of the commodity in the purchaser data file received by the second reception module;
a signature module configured to input an electronic signature detected by a detection device for detecting the electronic signature to the signature column of the electronic document; and
an output module configured to output data of the electronic document in which the electronic signature is input to the signature column.

5. The information processing apparatus according to claim 4, wherein
the creation module creates the electronic document the number of which corresponds to a required number thereof obtained from the information relating to the sales of the commodity; and
the signature module inputs the electronic signature to signature columns of all the electronic documents created by the creation module.

6. A method for inputting an electronic signature, including:
receiving a purchaser code for identifying a purchaser who receives a refund on a commodity purchased;
receiving a purchaser data file associated with a purchaser code from a storage device which stores the purchaser data file in which information recorded in a certificate for certifying that the purchaser identified by the purchaser code is subject to a tax exemption and information relating to sales of the commodity purchased by the purchaser are associated with the purchaser code;
creating an electronic document, having a signature column, which is required for a tax exemption measure based on the information recorded in the certificate and the information relating to the sales of the commodity in the purchaser data file;
inputting an electronic signature detected by a detection device for detecting the electronic signature to the signature column of the electronic document; and
outputting data of the electronic document in which the electronic signature is input to the signature column.
